# EUROPEAN PATENT APPLICATION

(11) **EP 2 573 152 A2**
(43) Date of publication of application: **27.03.2013**
(21) Application number: 12184831.1
(22) Date of filing: 18.09.2012
(51) Int. Cl.: C09J 7/02

(54) **Pressure-sensitive adhesive tape for battery**

(30) Priority: 20.09.2011 JP 2011204486
(71) Applicant: Nitto Denko Corporation, Osaka 567-8680 (JP)
(72) Inventor: Takamura, Yuichi, Ibaraki-shi, Osaka 567-8680 (JP); Hanai, Hiroomi, Ibaraki-shi, Osaka 567-8680 (JP); Kawabe, Shigeki, Ibaraki-shi, Osaka 567-8680 (JP); Iwata, Jun, Ibaraki-shi, Osaka 567-8680 (JP)
(74) Representative: Grünecker, Kinkeldey, Stockmair & Schwanhäusser

(57) **Abstract**

The present invention relates to a pressure-sensitive adhesive tape for battery containing: a substrate and a pressure-sensitive adhesive layer laminated on at least one surface of a substrate, in which the pressure-sensitive adhesive layer is laminated on the substrate, 0.5 mm or more inside from both edges of the substrate, and in which the pressure-sensitive adhesive tape has a 180° peeling pressure-sensitive adhesive force at 23°C being 0.1 N/10 mm or more, and has a slippage distance after a pressure-sensitive adhesive layer side of the pressure-sensitive adhesive tape is attached to a phenolic resin plate (attaching area: 10 mm x 20 mm), followed by applying a load of 500 g thereto at 40°C for 1 hour being 0.2 mm or less.

## Description

### TECHNICAL FIELD

The present invention relates to a pressure-sensitive adhesive tape for battery, and more particularly, to a pressure-sensitive adhesive tape that is used for preventing short-circuit by attaching the tape to an inside of the battery such as a lithium ion battery.

### BACK GROUND ART

Recently, a secondary battery such as a lithium ion battery is indispensable as an electric source of mobile devices such as a cellular phone or a laptop computer. In addition, since the lithium ion battery has high capacity and light weight, it is highly anticipated to be used as a battery for electric vehicles and has been required to be improved in battery capacity from now on.

As the capacity of the lithium ion battery becomes higher, especially in the case of winding type battery, the number of windings of the electrode plate tends to be increased. Therefore, a separator to be mainly used becomes thinner and thinner. However, as the separator becomes thinner, there has arisen a problem that a hole may be formed in a separator due to a very small impurity incorporated into a battery in manufacturing process of the battery or due to a burr existing on an electrode plate and may cause short-circuit between a positive-electrode plate and a negative-electrode plate to generate a heat, to thereby cause, for example, a fire accident.

For preventing short-circuit, there is a method for preventing hole formation when a thin separator comes into contact with a burr, by attaching a pressure-sensitive adhesive tape to an edge of an electrode plate or an electrode terminal on which a burr exists (Patent Document 1).

In particular, in the case of winding type battery, a pressure-sensitive adhesive tape is used around a lead of an electrode disposed in an inner part of a winding structure of the battery. In this case, because a high internal pressure is applied to the inner part of the winding structure, a pressure-sensitive adhesive layer of the pressure-sensitive adhesive tape is easily deformed and glue (a pressure-sensitive adhesive layer) easily protrudes from a substrate. Then, the glue that has protruded from the substrate of the pressure-sensitive adhesive tape comes into contact with an electrolytic solution. Because the vicinity of the leads has the highest reactivity in the battery, the glue reacts with an electrolyte in the electrolytic solution, and thus the electrolytic solution deteriorates, which leads to degradation of battery characteristics. More specifically, when a pressure-sensitive adhesive tape having an acrylic pressure-sensitive adhesive layer is used in the manufacture of a battery, crosslinking points and functional groups in the acrylic pressure-sensitive adhesive layer may chemically react with an electrolyte in an electrolytic solution during repeated charging/discharging processes under a high-voltage condition, which leads to deterioration of the battery. That is a problem.

Patent Document 2 discloses that, when a pressure-sensitive adhesive tape obtained by forming a pressure-sensitive adhesive layer containing a polyisobutylene rubber and a saturated hydrocarbon resin on a substrate film which is stable to an organic electrolytic solution, is used in the manufacture of secondary battery such as a lithium ion battery using the organic electrolytic solution, the battery does not deteriorate and can maintain high output level. However, in the saturated hydrocarbon resin which has been used to impart adhesive property, complete elimination of the impurities having a double bond in its structure is difficult due to the manufacturing reasons, and the battery slowly deteriorates during the repeated charging/discharging processes under a high-voltage condition. Since the reactivity between the pressure-sensitive adhesive layer and the electrolytic solution in a battery increases in the battery having higher capacity and higher output, deterioration of the electrolytic solution more easily occurs, which makes it difficult to maintain the output of the battery. That is a problem.

Patent Document 1: JP-A-10-247489 A
Patent Document 2: JP-A-9-165557 A

### SUMMARY OF THE INVENTION

An object of the present invention is to provide a pressure-sensitive adhesive tape for battery, which is attached to an electrode plate or the like to prevent short-circuit between electrodes caused by the presence of burrs in the electrode plate, in which the tape can suppress deterioration of an electrolytic solution caused when glue protrudes from a substrate of the tape.

In order to attain the above object, the present inventors have made intensive investigations and have prepared a pressure-sensitive adhesive tape which contains a substrate and a pressure-sensitive adhesive layer which is laminated on the substrate, with leaving specific width of portions on which the pressure-sensitive adhesive layer is not attached on both edges of the substrate, which has a specific pressure-sensitive adhesive force, and which has a specific slippage distance after being applied with a load of 500 g for 1 hour at 40°C. They have also found that in such a pressure-sensitive adhesive tape, glue hardly protrudes from a substrate even under a high pressure, and that when such a pressure-sensitive adhesive tape is used as a pressure-sensitive adhesive tape for battery, deterioration of an electrolytic solution in the battery can be significantly suppressed and output of the battery can be maintained at high level. The present invention has been accomplished on the basis of the above knowledge.

The present invention provides a pressure-sensitive adhesive tape for battery containing:
a substrate, and
a pressure-sensitive adhesive layer laminated on at least one surface of a substrate, in which
the pressure-sensitive adhesive layer is laminated on the substrate, 0.5 mm or more inside from both edges of the substrate,
the pressure-sensitive adhesive tape has a 180° peeling pressure-sensitive adhesive force at 23°C being 0.1 N/10 mm or more, and has a slippage distance after a pressure-sensitive adhesive layer side of the pressure-sensitive adhesive tape is attached to a phenolic resin plate (attaching area: 10 mm x 20 mm), followed by applying a load of 500 g thereto at 40°C for 1 hour being 0.2 mm or less.

The pressure-sensitive adhesive layer preferably has a thickness of from 1 µm to 45 µm.

The pressure-sensitive adhesive layer is preferably formed of a pressure-sensitive adhesive containing an acrylic polymer. More preferably, the pressure-sensitive adhesive further contains a crosslinking agent.

The content of the crosslinking agent in the pressure-sensitive adhesive is preferably from 0.4 parts by weight to 14 parts by weight based on 100 parts by weight of the acrylic polymer.

The pressure-sensitive adhesive tape according to the present invention is preferably attached to an electrode terminal and/or an electrode plate end, or to a portion of a separator with which an electrode plate end comes into contact, for short circuit prevention.

According to the pressure-sensitive adhesive tape for battery according to the present invention, pressure-sensitive adhesive layer non-laminated portions having a specific width are left on both edges of a substrate while maintaining sufficient pressure-sensitive adhesive force, so that protrusion of glue from the substrate hardly occurs even under a high pressure. Accordingly, by attaching the tape to an electrode plate or the like of a battery having a winding type electrode structure, short circuit between electrodes caused by penetration of burrs and the like through a separator can be prevented while suppressing deterioration of an electrolytic solution and maintaining output of the battery at a high level, whereby high stability and reliability can be imparted to the battery. The pressure-sensitive adhesive tape according to the present invention can be suitably used for battery having high output and capacity.

Furthermore, according to the pressure-sensitive adhesive tape for battery of the present invention, glue is hardly protruded from the substrate even when the tape is wound in a roll form (even when a high pressure is applied thereto) in manufacturing process, so that contamination of the production line can be prevented and decrease in yield due to the attachment of impurities to an edge of the pressure-sensitive adhesive tape can also be prevented. Accordingly, the pressure-sensitive adhesive tape for battery of the present invention has excellent productivity.

### BRIEF DESCRIPTION OF THE DRAWINGS

[Fig. 1] Fig. 1 is a schematic cross-sectional view showing one embodiment of a pressure-sensitive adhesive tape for battery according to the present invention.
[Fig. 2] Fig. 2 is a schematic cross-sectional view showing another embodiment of a pressure-sensitive adhesive tape for battery according to the present invention.
[Fig. 3] Figs. 3-1 to 3-3 are schematic views showing an use example of a pressure-sensitive adhesive tape for battery according to the present invention in a lithium ion battery: Fig. 3-1 is a view before use; Fig. 3-2 is a view showing attachment of the pressure-sensitive adhesive tape for battery according to the present invention to an electrode plate or the like; and Fig. 3-3 is a view showing the electrode plate wound up and fixed using the pressure-sensitive adhesive tape for battery according to the present invention.

### DESCRIPTION OF REFERENCE NUMERALS AND SIGNS

- 1:: Substrate
- 2A, 2B:: Pressure-sensitive adhesive layer
- 3, 3A, 3B:: Pressure-sensitive adhesive tape for battery
- L^{a1}, L^{a2}, L^{b1}, L^{b2}:: Width of pressure-sensitive adhesive layer non-laminated portion
- 4:: Electrode terminal
- 5:: Positive-electrode plate
- 6:: Negative-electrode plate
- 7:: Separator
- 8:: Active material

### DETAILED DESCRIPTION OF THE INVENTION

Embodiments of the present invention will be described in detail below with reference to the drawings, as needed.

The pressure-sensitive adhesive tape for battery according to the present invention is a pressure-sensitive adhesive tape obtained by laminating a pressure-sensitive adhesive layer on at least one surface of a substrate. The pressure-sensitive adhesive layer is laminated on the substrate, 0.5 mm or more inside from both edges thereof (in other word, the pressure-sensitive adhesive layer is laminated, with leaving portions on which the pressure-sensitive adhesive layer is not attached having a width of at least 0.5 mm on both edges of the substrate). The pressure-sensitive adhesive tape has a 180° peeling pressure-sensitive adhesive force at 23°C of 0.1 N/10 mm or more and has a slippage distance after a pressure-sensitive adhesive layer side of the pressure-sensitive adhesive tape is attached to a phenolic resin (Bakelite plate, attaching area: 10 mm x 20 mm), followed by applying a load of 500 g thereto at 40°C for 1 hour being 0.2 mm or less.

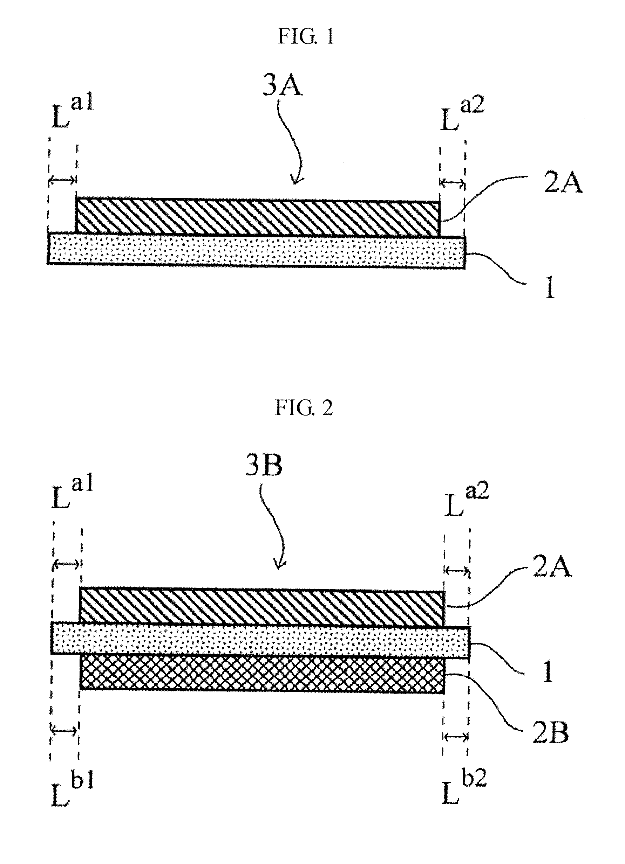

Fig. 1 is a schematic cross-sectional view showing one embodiment of a pressure-sensitive adhesive tape 3 for battery according to the present invention. Here, a pressure-sensitive adhesive layer 2A is provided on one surface of a substrate 1 with pressure-sensitive adhesive layer non-laminated portions having widths L^{a1} and L^{a2} (mm) (L^{a1}, L^{a2}≥0.5), respectively, on both edges of the substrate 1. The widths L^{a1} and L^{a2} (mm) may be the same or different from each other.

Fig. 2 is a schematic cross-sectional view showing another embodiment of a pressure-sensitive adhesive tape 3 for battery according to the present invention. Here, pressure-sensitive adhesive layers 2A and 2B are provided on both surfaces of a substrate 1 with pressure-sensitive adhesive layer non-laminated portions having widths L^{a1}, L^{a2}, L^{b1} and L^{b2} (mm) (L^{a1}, L^{a2}, L^{b1}, L^{b2} ≥0.5), respectively, on both edges of the substrate 1. The pressure-sensitive adhesive layers 2A and 2B may be the same or different from each other in terms of compositions and thicknesses thereof. Further, L^{a1}, L^{a2}, L^{b1} and L^{b2} (mm) may be the same or different from each other.

### [Pressure-Sensitive Adhesive Layer]

A polymer component contained in the pressure-sensitive adhesive which forms the pressure-sensitive adhesive layer of the pressure-sensitive adhesive tape according to the present invention is not particularly limited. Examples thereof include known polymers such as a rubber polymer, an acrylic polymer and a silicone polymer.

Examples of the acrylic polymers include a polymer obtained by copolymerizing a low Tg monomer for imparting adhesion as a main monomer, a high Tg monomer for imparting adhesive property or cohesive property as a comonomer and a functional groupcontaining monomer for improving adhesive property.

Examples of the low Tg monomers include alkyl (meth)acrylates having a linear or branched alkyl group of 1 to 20 carbon atoms such as methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)-acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. Incidentally, in this specification, the term "(meth)acrylate" means "acrylate" and/or "methacrylate".

Among the above-mentioned monomers, alkyl (meth)acrylates having an alkyl group of 4 to 12 carbon atoms are preferred in that the pressure-sensitive adhesive layer having an excellent adhesive property and water resistance at ordinary temperature can be formed, and particularly preferred are 2-ethylhexyl acrylate (2EHA) and n-butyl acrylate (BA).

The content of the low Tg monomer is preferably from 50% by weight to 100% by weight, and particularly preferably from 70% by weight to 100% by weight, based on the total amount (100% by weight) of monomer components constituting the acrylic polymer.

Examples of the high Tg monomers include vinyl group-containing compounds such as vinyl acetate, vinyl propionate, vinyl ether, styrene, acrylonitrile and methacrylonitrile.

The content of the high Tg monomer is preferably less than 20% by weight, and particularly preferably less than 10% by weight, based on the total amount (100% by weight) of monomer components constituting the acrylic polymer.

Examples of the functional group-containing monomers include carboxy group- or acid anhydride group-containing monomers such as (meth)acrylic acid, itaconic acid, maleic acid, fumaric acid, crotonic acid, isocrotonic acid, maleic anhydride and itaconic anhydride; hydroxy group-containing monomers such as hydroxyalkyl (meth)acrylates such as 2-hydroxyethyl (meth)acrylate, 2-hydroxypropyl (meth)acrylate, 3-hydroxypropyl (meth)acrylate, 4-hydroxybutyl (meth)acrylate and 6-hydroxyhexyl (meth)acrylate, vinyl alcohol, and allyl alcohol; amido group-containing monomers such as (meth)acrylamide; N-substituted amido group-containing monomers such as N-methyl (meth)acrylamide, N-ethyl (meth)acrylamide, N,N-dimethyl (meth)acrylamide, N-t-butyl (meth)acrylamide, N-methylol (meth)acrylamide, N-methoxymethyl (meth)acrylamide, N-ethoxymethyl (meth)acrylamide, N-buthoxymethyl (meth)acrylamide, N-octyl acrylamide and N-hydroxyethyl acrylamide; amino group-containing monomers such as aminoethyl (meth)acrylate, dimethylaminoethyl (meth)acrylate, diethylaminoethyl (meth)acrylate, dimethylaminopropyl (meth)acrylate and t-butylaminoethyl (meth)acrylate; and glycidyl group-containing monomers such as glycidyl (meth)acrylate and methylglycidyl (meth)acrylate. Among the above-mentioned functional group-containing monomers, carboxy group-containing monomers (particularly, acrylic acid (AA)) and hydroxy groupcontaining monomers (particularly, 2-hydroxyethyl (meth)acrylate) are preferred.

The content of the functional group-containing monomer is preferably less than 20% by weight, particularly preferably 10% by weight or less, and most preferably 7% by weight or less (for example, from 1.0% by weight to 6% by weight, preferably from 3.0% by weight to 5.5% by weight, and particularly preferably from 3.5% by weight to 5.3% by weight), based on the total amount (100% by weight) of monomer components constituting the acrylic polymer.

The acrylic polymer can be prepared by polymerizing the above-mentioned monomer components by means of a known and commonly used polymerization method. Examples of polymerization methods of the acrylic polymer include solution polymerization method, emulsion polymerization method, bulk polymerization method, and polymerization method using active energy ray irradiation (active energy ray polymerization method). Among the above-mentioned methods, solution polymerization method and active energy ray polymerization method are preferred, and solution polymerization method is particularly preferred, in terms of transparency, water resistance, cost and the like.

In the above-mentioned solution polymerization, various common solvents can be used. Examples of such solvents include organic solvents such as esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; and ketones such as methyl ethyl ketone and methyl isobutyl ketone. The solvents may be used either alone or in combination of two or more kinds thereof.

In the polymerization of the acrylic polymer, a polymerization initiator can be used. The polymerization initiator is not particularly limited, and can be appropriately selected for use from known and commonly used initiators. Examples thereof include oil-soluble polymerization initiators such as azo polymerization initiators such as 2,2-azobisisobutylonitrile, 2,2-azobis(4-methoxy-2,4-dimethylvareronitrile), 2,2-azobis(2,4-dimethylvareronitrile), 2,2-azobis(2-methylbutylonitrile), 1,1-azobis(cyclohexane-1-carbonitrile), 2,2-azobis(2,4,4-trimethylpentane) and dimethyl-2,2-azobis(2-methyl-propionate); and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane and 1,1-bis(t-butylperoxy)cyclododecane. These initiators may be used either alone or in combination of tow or more kinds thereof. The amount of the polymerization initiator to be used is not particularly limited, as long as it is in a range conventionally usable as the polymerization initiator.

The polymer has a weight average molecular weight (Mw) of, for example, preferably from about 200,000 to about 3,000,000, and more preferably from about 1,000,000 to about 3,000,000, in that such a polymer is hard to be eluted into an electrolytic solution, which makes it possible to suppress deterioration of the electrolytic solution. When the weight average molecular weight (Mw) of the polymer is less than the above-mentioned range, cohesive force tends to become poor, and under a highpressure circumstance such as a case where the tape is used inside a battery, the pressure-sensitive adhesive layer is easily deformed to cause protrusion of glue from the substrate, resulting in easy elution thereof into an electrolytic solution, which tends to cause deterioration of the electrolytic solution. On the other hand, when the weight average molecular weight (Mw) of the polymer exceeds the above-mentioned range, the pressure-sensitive adhesive layer tends to become too hard, resulting in insufficient pressure-sensitive adhesive force, and it tends to become difficult to attach the tape to an electrode plate or the like. The weight average molecular weight of the polymer can be adjusted by controlling the amount of crosslinking agent used, the temperature or time in polymerization, the monomer concentration or the like.

Further, the polymer preferably has a glass transition temperature (Tg) of -20°C or less. When the glass transition temperature (Tg) exceeds -20°C, the pressure-sensitive adhesive layer tends to become hard depending on use temperature, resulting in insufficient pressure-sensitive adhesive force, and it may become difficult to attach the tape to an electrode plate or the like.

A pressure-sensitive adhesive which forms the pressure-sensitive adhesive layer of the present invention may contain an additive in addition to the above-mentioned polymer. In the present invention, the pressure-sensitive adhesive which forms the pressure-sensitive adhesive layer preferably contains a crosslinking agent together with the above-mentioned polymer. When the pressure-sensitive adhesive contains a crosslinking agent, the polymer can be crosslinked to form a three-dimensional crosslinked structure, and therefore, cohesive property of the pressure-sensitive adhesive layer is enhanced, which makes it possible to more enhance glue protrusion preventing property.

Examples of the crosslinking agents include various crosslinking agents such as epoxy compounds, isocyanate compounds, metal chelate compounds, metal alkoxides, metal salts, amine compounds, hydrazine compounds and aldehyde compounds. These crosslinking agents may be used either alone or in combination of two or more kinds thereof. The crosslinking agent can be appropriately selected for use depending on the functional group contained in the acrylic polymer. Above all, isocyanate compounds are preferably used as a crosslinking agent of the present invention in terms of moderately long pot life and excellent workability.

The amount of the crosslinking agent used is, for example, from about 0.4 parts by weight to about 14 parts by weight, preferably from about 0.5 parts by weight to about 10 parts by weight, and particularly preferably from about 0.5 parts by weight to about 5 parts by weight, based on 100 parts by weight of the above-mentioned acrylic polymer. When the amount of the crosslinking agent used is less than the above-mentioned range, it may become difficult to obtain an effect of enhancing glue protrusion preventing property. On the other hand, when the amount of the crosslinking agent used exceeds the above-mentioned range, transparency may be decreased by whitening to impair appearance of the tape. Further, pressure-sensitive adhesive force of the pressure-sensitive adhesive layer is decreased, and it may become difficult to attach the tape to an electrode plate or the like.

Examples of the additives other than the crosslinking agent include a tackifier, a softener, a plasticizer, a filler, and an antioxidant.

Examples of tackifiers include rosin resins and derivatives thereof, polyterpene resins, terpene-phenol resins, coumarone-indene resins, petroleum resins, styrenic resins, and xylene resins.

Examples of softeners include liquid polyethers, glycol esters, liquid polyterpenes, liquid polyacrylates, phthalic esters, and trimellitic esters.

As a method for forming the pressure-sensitive adhesive layer, a known and commonly used method can be employed. Examples thereof include a method of diluting a polymer and an additive used as needed with a solvent (for example, toluene, xylene, ethyl acetate or methyl ethyl ketone) used as needed to prepare a pressure-sensitive adhesive, and applying this adhesive on an appropriate separator (such as release paper) or a substrate, followed by drying.

The thickness of the pressure-sensitive adhesive layer in the present invention is, for example, from 1 µm to 45 µm (preferably from 1 µm to 40 µm, more preferably from 1 µm to 30 µm, still more preferably from 1.5 µm to 20 µm, and most preferably from 5 µm to 15 µm). When the thickness of the pressure-sensitive adhesive layer is less than 1 µm, the adhesive property may become insufficient, and it may become difficult to be used for the purpose of preventing short circuit between electrodes by attaching the tape to the inside of a battery. On the other hand, when the thickness of the pressure-sensitive adhesive layer exceeds 45 µm, deformation of the pressure-sensitive adhesive layer or protrusion of glue from a substrate may be liable to occur to cause occurrence of deterioration of an electrolyte. Further, the volume thereof occupied in the battery may become excessively large, which tends to make it difficult to increase the capacity of the battery.

### [Substrate]

The substrate is not particularly limited, and various substrates can be used. Use can be made of, for example, appropriate thin leaf bodies such as fibrous substrates such as cloth, non-woven fabric, felt and net; paper substrates such as various papers; metal substrates such as metal foils and metal plates; plastic substrates such as films or sheets made of various resins; rubber substrates such as rubber sheets; foamed bodies such as foamed sheets; and laminated bodies thereof. Examples of materials of the plastic substrates include polyesters such as polyethylene terephthalate, polyethylene naphthalate, polybutylene terephthalate and polybutylene naphthalate; polyolefins such as polyethylene, polypropylene and ethylene-propylene copolymer; polyvinyl alcohol; polyvinylidene chloride; polyvinyl chloride; vinyl chloride-vinyl acetate copolymer; polyvinyl acetate; polyamides; polyimides; celluloses; fluororesins; polyethers; polyether amides; polyphenylene sulfides; polystyrene resins such as polystyrene; polycarbonates; and polyethersulfones. These may be used either alone or in combination of two or more kinds thereof. Further, the substrate may have either a single layer configuration or a multilayered configuration.

Above all, plastic substrate is preferred as a substrate in the present invention, in that the plastic substrate has excellent solvent resistance and heat resistance, and further has excellent stretchability to exhibit stress buffering property against external stress, whereby the substrate is hard to be broken.

The material of the plastic substrate can be appropriately selected for use depending on characteristics required for the pressure-sensitive adhesive tape for battery. When toughness is required, polyolefins (particularly polypropylene or polyethylene) are preferably used, and when heat resistance is required, polyimide is preferably used.

The plastic substrate may be subjected to a drawing treatment (uniaxial drawing or biaxial drawing) to control deformability. Further, in order to increase adhesiveness with the pressure-sensitive adhesive layer, a surface of the substrate may be subjected to a commonly used surface treatment, for example, an oxidation treatment by a chemical or physical method, such as chromic acid treatment, ozone exposure, flame exposure, high pressure rapid exposure or ionizing radiation treatment, as needed.

Although not particularly limited, the thickness of the substrate is, for example, from about 8 µm to about 100 µm, preferably from about 10 µm to about 50 µm, and particularly preferably from 15 µm to 30 µm. When the thickness of the substrate is less than the above-mentioned range, strength of the pressure-sensitive adhesive tape may become excessively low, resulting in a possibility of damaging practicality. On the other hand, when the thickness of the substrate exceeds the above-mentioned range, the volume thereof occupied in the battery may become excessively large, which tends to make it difficult to increase the capacity of the battery.

### [Pressure-Sensitive Adhesive Tape for Battery]

The pressure-sensitive adhesive tape for battery according to the present invention is a pressure-sensitive adhesive tape obtained by laminating a pressure-sensitive adhesive layer on at least one surface of a substrate, in which the pressure-sensitive adhesive layer is laminated on the substrate, 0.5 mm or more (for example, about 0.5 mm to about 10 mm, preferably about 1 mm to about 7 mm and particularly preferably about 3 mm to about 6 mm) inside from the both edges of the substrate. That is to say, the pressure-sensitive adhesive layer is laminated (coated) on the substrate with leaving pressure-sensitive adhesive layer non-laminated portions (pressure-sensitive adhesive layer non-coated regions) having widths of 0.5 mm or more (for example, about 0.5 mm to about 10 mm, preferably about 1 mm to about 7 mm and particularly preferably about 3 mm to about 6 mm) on the both edges of the substrate. Such a pressure-sensitive adhesive tape for battery according to the present invention can exhibit both adhesive property and glue protrusion preventing property. When the width of the pressure-sensitive adhesive layer non-laminated portion is less than the above-mentioned range, it becomes difficult to prevent the protrusion of glue.

The width of the pressure-sensitive adhesive tape for battery according to the present invention can be appropriately adjusted, for example, to about 10.0 mm to about 150.0 mm (preferably about 15.0 mm to about 110.0 mm).

Further, the ratio of the widths of the pressure-sensitive adhesive layer non-laminated portions (pressure-sensitive adhesive layer non-coated regions) occupied to the width of the pressure-sensitive adhesive tape for battery according to the present invention is, for example, from about 1% to about 80%, and preferably from about 1.5% to about 70%. When the ratio of widths of the pressure-sensitive adhesive layer non-laminated portions (pressure-sensitive adhesive layer non-coated regions) occupied exceeds the above-mentioned range, pressure-sensitive adhesive force tends to be decreased, so that it may become difficult to sufficiently exhibit the effect of preventing short circuit between electrodes by attaching the tape to the inside of a battery. On the other hand, when the ratio of the widths of the pressure-sensitive adhesive layer non-laminated portions (pressure-sensitive adhesive layer non-coated regions) occupied is less than the above-mentioned range, deformation of the pressure-sensitive adhesive layer or protrusion of glue from the substrate may be liable to occur to tend to cause occurrence of deterioration of an electrolyte.

The pressure-sensitive adhesive tape for battery according to the present invention has excellent shear holding force, and has a slippage distance which is measured after a load of 500 g has been applied thereto at 40°C for 1 hour using Bakelite plate as an adherend (in accordance with JIS Z 0237: 2000) being 0.20 mm or less, preferably 0.15 mm or less, and particularly preferably 0.12 mm or less. When the slippage distance is more than the above-mentioned range, it tends to become difficult to prevent protrusion of glue.

The pressure-sensitive adhesive tape for battery according to the present invention has a 180° peeling pressure-sensitive adhesive force at 23°C (in accordance with JIS Z 0237: 2000) being 0.1 N/10 mm or more, preferably from about 0.1 N/10 mm to about 4.0 N/10 mm, and particularly preferably from about 0.2 N/10 mm to about 2.0 N/10 mm. Since the pressure-sensitive adhesive tape for battery according to the present invention has the above-mentioned pressure-sensitive adhesive force, the tape can sufficiently exhibit the effect of preventing short circuit between electrodes by attaching the tape to the inside of a battery such as a lithium ion battery.

Examples of methods for forming the pressure-sensitive adhesive tape for battery according to the present invention include a method of applying a pressure-sensitive adhesive which forms a pressure-sensitive adhesive layer onto a substrate, 0.5 mm or more inside from the both edges thereof to form a pressure-sensitive adhesive layer, and a method of applying a pressure-sensitive adhesive which forms a pressure-sensitive adhesive layer onto an appropriate separator (such as release paper) to form a pressure-sensitive adhesive layer, and transferring the pressure-sensitive adhesive layer to a substrate, 0.5 mm or more inside from the both edges of the substrate, thereby laminating the pressure-sensitive adhesive layer on the substrate. In the case where the tape is formed by transfer, voids may remain in an interface between the pressure-sensitive adhesive layer and the substrate. In this case, the voids are diffused by performing heating pressing treatment by autoclave treatment or the like, whereby the voids can be dissipated.

Further, in the pressure-sensitive adhesive tape for battery according to the present invention, a separator (release liner) may be provided on the surface of the pressure-sensitive adhesive layer from the viewpoints of protection of the surface of the pressure-sensitive adhesive layer and prevention of blocking. The separator is removed when the pressure-sensitive adhesive tape for battery according to the present invention is attached to an adherend, and may not necessarily be provided. The separator to be used is not particularly limited, and a known and commonly used release paper or the like can be used. For example, use can be made of a substrate having a release layer such as a plastic film or paper which is subjected to surface treatment with a release agent such as a silicone, a long chain alkyl, a fluorine or a molybdenum sulfide release agent; a low adhesive substrate formed of a fluorinated polymer such as polytetrafluoroethylene, polychlorotrifluoroethylene, polyvinyl fluoride, polyvinylidene fluoride, tetrafluoroethylenehexafluoropropylene copolymer or chlorofluoroethylene-vinylidene fluoride copolymer; and a low adhesive substrate formed of a non-polar polymer such as an olefin resin (for example, polyethylene or polypropylene).

When the pressure-sensitive adhesive tape for battery according to the present invention is a double-coated pressure-sensitive adhesive tape, the separator may be provided on surfaces of the both pressure-sensitive adhesive layers of the pressure-sensitive adhesive tape for battery according to the present invention. Alternatively, a separator having a rear-side release layer may be provided on a surface of one pressure-sensitive adhesive layer of the pressure-sensitive adhesive tape, and the rear-side release layer of the separator may be allowed to come into contact with a surface of the other pressure-sensitive adhesive layer on the opposite side of the pressure-sensitive adhesive tape by winding the sheet.

The pressure-sensitive adhesive tape for battery according to the present invention is preferably used for manufacturing a battery in which a non-aqueous electrolytic solution is sealed, such as a lithium ion battery.

The non-aqueous electrolytic solution is not particularly limited, and examples thereof include an electrolytic solution in which a mixed solvent of a cyclic carbonate such as propylene carbonate (PC) or ethylene carbonate (EC) and a chain carbonate such as dimethyl carbonate (DMC), ethyl methyl carbonate (EMC) or diethyl carbonate (DEC), and a lithium salt such as LiPF₆ as an electrolyte are dissolved.

In the lithium ion battery, a positive-electrode plate obtained by coating a positive-electrode core body with a positive-electrode active material and a negative-electrode plate obtained by coating a negative-electrode core body with a negative-electrode active material are provided so as to face each other with the interposition of a separator to form an assembly, and the assembly is wound in a vortex form to obtain a winding type electrode group. The lithium ion battery has a structure in which the winding type electrode group, electrode terminals drawn out from the positive-electrode plate and the negative-electrode plate, and an electrolytic solution are sealed in an external can.

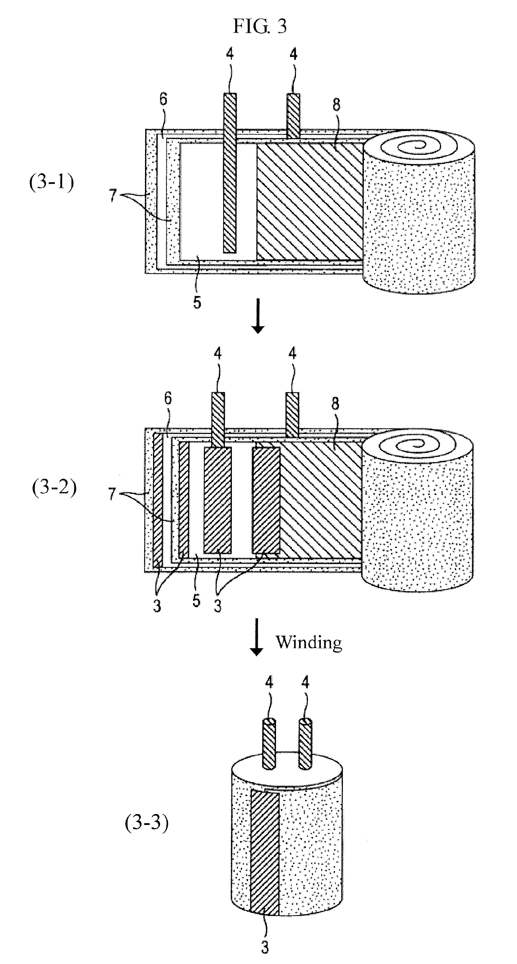

The pressure-sensitive adhesive tape for battery according to the present invention can be used for the purpose of preventing penetration of impurities or burrs to a separator, and for the purpose of improving insertion competence of an electrode into a battery case (for example, for the purpose of winding and fixing a winding end of a winding type battery and for the purpose of preventing stripping of an active material), in the manufacturing process of a battery such as a lithium ion battery. The attachment position is not particularly limited as long as the above-mentioned object can be accomplished. The pressure-sensitive adhesive tape is preferably used to be attached, for example, to the inside of a battery (particularly, an electrode terminal, an electrode plate end, a portion of the separator with which the electrode plate end comes into contact, an end of the active material, and a winding end) (see Figs. 3-1 to 3-3).

### EXAMPLES

The present invention will be described in further detail below with referred to the following Examples, but the present invention should not be construed as being limited to these Examples.

### Example 1

To 100 parts by weight of an acrylic polymer containing 2-ethylhexyl acrylate/acrylic acid (100 parts by weight/5 parts by weight) as constituent monomers was added 2 parts by weight of an isocyanate crosslinking agent (trade name: "CORONATE L", manufactured by Nippon Polyurethane Industry Co., Ltd.), followed by dilution with toluene to obtain a pressure-sensitive adhesive (1).
The pressure-sensitive adhesive (1) obtained was applied onto a biaxially-drawn polypropylene film (OPP) having a thickness of 20 µm, 0.5 mm inside from both edges thereof, to a thickness after drying of 15 µm, and dried to prepare a pressure-sensitive adhesive tape (1).

### Example 2

A pressure-sensitive adhesive tape (2) was prepared in the same manner as in Example 1 with the exception that the thickness of the pressure-sensitive adhesive layer after drying was changed from 15 µm to 2 µm.

### Example 3

A pressure-sensitive adhesive tape (3) was prepared in the same manner as in Example 1 with the exception that the thickness of the pressure-sensitive adhesive layer after drying was changed from 15 µm to 45 µm.

### Example 4

A pressure-sensitive adhesive tape (4) was prepared in the same manner as in Example 1 with the exception that the amount of the isocyanate crosslinking agent (trade name: "CORONATE L", manufactured by Nippon Polyurethane Industry Co., Ltd.) used was changed from 2 parts by weight to 0.5 parts by weight.

### Example 5

A pressure-sensitive adhesive tape (5) was prepared in the same manner as in Example 1 with the exception that the amount of the isocyanate crosslinking agent (trade name: "CORONATE L", manufactured by Nippon Polyurethane Industry Co., Ltd.) used was changed from 2 parts by weight to 10 parts by weight.

### Example 6

A pressure-sensitive adhesive tape (6) was prepared in the same manner as in Example 1 with the exception that the substrate was changed from the biaxially-drawn polypropylene film (OPP) having a thickness of 20 µm to a polyimide film (PI) having a thickness of 25 µm.

### Example 7

A pressure-sensitive adhesive tape (7) was prepared in the same manner as in Example 1 with the exception that the constituent monomers of the pressure-sensitive adhesive were changed from 2-ethylhexyl acrylate/acrylic acid (100 parts by weight/5 parts by weight) to 2-ethylhexyl acrylate/butyl acrylate/methyl methacrylate/hydroxyethyl acrylate (25 parts by weight/75 parts by weight/5 parts by weight/4 parts by weigh).

### Example 8

A pressure-sensitive adhesive tape (8) was prepared in the same manner as in Example 1 with the exception that constituent monomers of the pressure-sensitive adhesive were changed from 2-ethylhexyl acrylate/acrylic acid (100 parts by weight/5 parts by weight) to butyl acrylate/acrylic acid (100 parts by weight/5 parts by weight).

### Example 9

A pressure-sensitive adhesive tape (9) was prepared in the same manner as in Example 1 with the exception that 2 parts by weight of the isocyanate crosslinking agent (trade name: "CORONATE L", manufactured by Nippon Polyurethane Industry Co., Ltd.) and 0.05 part by weight of an epoxy crosslinking agent (trade name: "TETRAD-C", manufactured by Mitsubishi Gas Chemical Company, Inc.) were added as the crosslinking agents.

### Comparative Example 1

A pressure-sensitive adhesive tape (10) was prepared in the same manner as in Example 1 with the exception that the thickness of the pressure-sensitive adhesive layer after drying was changed from 15 µm to 60 µm.

### Comparative Example 2

A pressure-sensitive adhesive tape (11) was prepared in the same manner as in Example 4 with the exception that the thickness of the pressure-sensitive adhesive layer after drying was changed from 15 µm to 25 µm.

### Comparative Example 3

A pressure-sensitive adhesive tape (12) was prepared in the same manner as in Example 1 with the exception that the isocyanate crosslinking agent (trade name: "CORONATE L", manufactured by Nippon Polyurethane Industry Co., Ltd.) was not used.

### Comparative Example 4

A pressure-sensitive adhesive tape (13) was prepared in the same manner as in Example 2 with the exception that the pressure-sensitive adhesive layer was provided on the whole surface of the substrate.

### Comparative Example 5

A pressure-sensitive adhesive tape (14) was prepared in the same manner as in Example 1 with the exception that the thickness of the pressure-sensitive adhesive layer after drying was changed from 15 µm to 0.5 µm.

### Comparative Example 6

A pressure-sensitive adhesive tape (15) was prepared in the same manner as in Example 1 with the exception that the amount of the isocyanate crosslinking agent (trade name: "CORONATE L", manufactured by Nippon Polyurethane Industry Co., Ltd.) used was changed from 2 parts by weight to 15 parts by weight.

For the pressure-sensitive adhesive tapes obtained in Examples and Comparative Examples, the following tests were performed to evaluate the tapes as pressure-sensitive adhesive tapes for battery.

### <Glue Protrusion Prevention Test>

The pressure-sensitive adhesive tapes obtained in Examples and Comparative Examples were each pressed on a metal SUS plate under the following conditions by using a heat press machine (trade name: "TP-701-B heat seal tester, vertical temperature control type", manufactured by Tester Sangyo Co., Ltd.), and the presence or absence of the protrusion of glue from the edges of the pressure-sensitive adhesive tape was observed by using an optical microscope (trade name: "Digital Microscope VHX-100", manufactured by Keyence Corporation). The glue protrusion preventing property was evaluated according to the following criteria.

### (Pressing-on Conditions)

Temperature: 150°C
Pressure: 0.5 MPa
Compression time: 3 minutes

### (Evaluation Criteria of Glue Protrusion Preventing Property)

The case where no glue was protruded: "A"
The case where the glue was protruded: "B"
Further, when the glue was protruded, the protrusion distance was measured, and the maximum value thereof was taken as the glue protrusion distance (mm) of the tape.

### <Measurement of Shear Holding Force>

The shear holding force of the pressure-sensitive adhesive tapes obtained in Examples and Comparative Examples was evaluated by measuring the slippage distance (mm) under the following conditions using a creep tester (trade name: "TAPE CREEP TESTER", manufactured by Imada Seisakusyo Co., Ltd.). The shorter slippage distance indicates the more excellent shear holding force.
Measurement conditions: (in accordance with JIS Z 0237: 2000)
Adherend: Bakelite plate
Temperature: 40°C
Load: 500 gf
Holding area: 10 mm wide x 20 mm long

### <Measurement of Pressure-Sensitive Adhesive Force>

The pressure-sensitive adhesive force of the pressure-sensitive adhesive tapes (10 mm wide) obtained in Examples and Comparative Examples was measured under the following conditions:
Measurement conditions: (in accordance with JIS Z 0237: 2000)
Attaching conditions: allowed to stand at room temperature for 30 minutes after one reciprocating pressing-on motion with a 2-kg roller
Measurement environment: measured at room temperature after attachment
Peeling angle: 180°
Peeling speed: 300 mm/min

**[Table 1]**

| | | | | Example | | | | | | | | | Comparative Example | | | | | |
|---|---|---|---|---|---|---|---|---|---|---|---|---|---|---|---|---|---|---|
| | | | | 1 | 2 | 3 | 4 | 5 | 6 | 7 | 8 | 9 | 1 | 2 | 3 | 4 | 5 | 6 |
| Pressure-Sensitive Adhesive Layer | Polymer Component (parts by weight) | | 2-Ethylhexyl Acrylate | 100 | 100 | 100 | 100 | 100 | 100 | 25 | - | 100 | 100 | 100 | 100 | 100 | 100 | 100 |
| | | | Butyl Acrylate | - | - | - | - | - | - | 75 | 100 | - | - | - | - | - | - | - |
| | | | Methyl Methacrylate | - | - | - | - | - | - | 5 | - | - | - | - | - | - | - | - |
| | | | Acrylic Acid | 5 | 5 | 5 | 5 | 5 | 5 | - | 5 | 5 | 5 | 5 | 5 | 5 | 5 | 5 |
| | | | Hydroxyethyl Acrylate | - | - | - | - | - | - | 4 | - | - | - | - | - | - | - | - |
| | Crosslinking Agent (parts by weight) | | CORONATE L | 2 | 2 | 2 | 0.5 | 10 | 2 | 2 | 2 | 2 | 2 | 0.5 | - | 2 | 2 | 15 |
| | | | TETRAD-C | - | - | - | - | - | - | - | - | 0.05 | - | - | - | - | - | - |
| | Thickness (µm) | | | 15 | 2 | 45 | 15 | 15 | 15 | 15 | 15 | 15 | 60 | 25 | 15 | 2 | 0.5 | 15 |
| Substrate | | OPP: Thickness (µm) | | 20 | 20 | 20 | 20 | 20 | - | 20 | 20 | 20 | 20 | 20 | 20 | 20 | 20 | 20 |
| | | PI: Thickness (µm) | | - | - | - | - | - | 25 | - | - | - | - | - | - | - | - | - |
| Evaluation | | Shear Holding Force (mm) | | 0.10 | 0.10 | 0.19 | 0.19 | 0.10 | 0.10 | 0.10 | 0.10 | 0.10 | 0.23 | 0.21 | 25.0 | 0.10 | 0.10 | 0.10 |
| | | Glue Protrusion Preventing Property | | A | A | A | A | A | A | A | A | A | B | B | B | B | A | A |
| | | Glue Protrusion Distance (mm) | | - | - | - | - | - | - | - | - | - | 0.05 | 0.20 | 0.30 | 0.10 | - | - |
| | | Pressure-Sensitive Adhesive Force (N/10 mm) | | 1.78 | 1.20 | 2.30 | 1.80 | 1.38 | 1.90 | 0.88 | 1.84 | 1.60 | 2.78 | 1.92 | 1.85 | 1.20 | Unmeasurable | Unmeasurable |

For the pressure-sensitive adhesive tape obtained in Comparative Example 5, since the thickness of the pressure-sensitive adhesive layer was excessively thin, the pressure-sensitive adhesive force was less than the detection limit thereof.
For the pressure-sensitive adhesive tape obtained in Comparative Example 6, since the pressure-sensitive adhesive layer became too hard, the pressure-sensitive adhesive force was less than the detection limit thereof.

While the present invention has been described in detail with reference to the specific embodiments thereof, it will be apparent to one skilled in the art that various changes and modifications can be made therein without departing from the spirit and scope of the present invention.
The present application is based on the Japanese Patent Application No. 2011-204486 filed on September 20, 2011, and the entire contents thereof are incorporated herein by reference. All references cited herein are incorporated in their entirety.

## Claims

1. A pressure-sensitive adhesive tape for battery comprising:
a substrate, and
a pressure-sensitive adhesive layer laminated on at least one surface of a substrate, wherein
the pressure-sensitive adhesive layer is laminated on the substrate, 0.5 mm or more inside from both edges of the substrate,
the pressure-sensitive adhesive tape has a 180° peeling pressure-sensitive adhesive force at 23°C being 0.1 N/10 mm or more, and has a slippage distance after a pressure-sensitive adhesive layer side of the pressure-sensitive adhesive tape is attached to a phenolic resin plate (attaching area: 10 mm x 20 mm), followed by applying a load of 500 g thereto at 40°C for 1 hour being 0.2 mm or less.

2. The pressure-sensitive adhesive tape according to claim 1, wherein the pressure-sensitive adhesive layer has a thickness of from 1 µm to 45 µm.

3. The pressure-sensitive adhesive tape according to claim 1 or 2, wherein the pressure-sensitive adhesive layer is formed of a pressure-sensitive adhesive comprising an acrylic polymer.

4. The pressure-sensitive adhesive tape according to claim 3, wherein the pressure-sensitive adhesive further comprises a crosslinking agent.

5. The pressure-sensitive adhesive tape according to claim 4, wherein the content of the crosslinking agent in the pressure-sensitive adhesive is from 0.4 parts by weight to 14 parts by weight based on 100 parts by weight of the acrylic polymer.

6. The pressure-sensitive adhesive tape according to any one of claims 1 to 5, wherein the pressure-sensitive adhesive tape is attached to an electrode terminal and/or an electrode plate end.

7. The pressure-sensitive adhesive tape according to any one of claims 1 to 5, wherein the pressure-sensitive adhesive tape is attached to a portion of a separator with which an electrode plate end comes into contact.
